# EUROPÄISCHE PATENTANMELDUNG

(11) **EP 4 651 101 A1**
(43) Veröffentlichungstag der Anmeldung: **19.11.2025**
(21) Anmeldenummer: 24175674.1
(22) Anmeldetag: 14.05.2024
(51) Int. Cl.: G06V 20/52

(54) **VERFAHREN ZUR BEWERTUNG UND STEUERUNG DER QUALITÄT VON CRIMPVERBINDUNGEN**

(71) Anmelder: Schäfer Werkzeug- und Sondermaschinenbau GmbH, 76669 Bad Schönborn (DE)
(72) Erfinder: SCHÄFER, Alexander, 76669 Bad Schönborn-Langenbrücken (DE); SCHÄFER, Markus, 76669 Bad Schönborn-Langenbrücken (DE); MEINERS, Moritz, 76669 Bad Schönborn-Langenbrücken (DE); NEUBAUER, Stefan, 76669 Bad Schönborn-Langenbrücken (DE)
(74) Vertreter: Hoffmann Eitle

(57) **Zusammenfassung**

Es wird ein Verfahren zur Bewertung und Steuerung der Qualität von Crimpverbindungen bereitgestellt, wobei Prozessdaten während einer Durchführung eines Crimpvorgangs mittels eines oder mehrerer Sensoren erfasst werden, und mindestens ein Modell, insbesondere ein Modell zum maschinellen Lernen, bereitgestellt wird, welches eine Durchführung eines Crimpvorgangs abbildet, wobei die Prozessdaten mit dem Modell kombiniert werden. Auf Grundlage der Kombination werden mindestens eine mechanische Eigenschaft und/oder eine Klassifikation der Crimpverbindung bestimmt.

## Beschreibung

### Technisches Gebiet

Die Erfindung betrifft ein Verfahren zur Bewertung und Steuerung der Qualität von Crimpverbindungen sowie ggf. als Basis für einen digitalen Zwilling. Ferner betrifft die Erfindung ein System zur Bewertung und Steuerung der Qualität von Crimpverbindungen. Eine Crimpverbindung betrifft insbesondere eine Verbindung eines Kontaktelements mit einem, bevorzugt elektrischen, Leiter, oder auch die mechanische Verbindung zweier Komponenten, wobei mindestens eine Komponente zumindest abschnittsweise metallisch ist.

### Stand der Technik

Zur Qualitätsbewertung einer Crimpverbindung ist es bekannt, ein Muster zu erstellen, für das, neben einer visuellen Prüfung, primär die Crimphöhe sowie die Auszugskraft als Qualitätskriterien gemessen werden. Somit wird bei jedem neuen Auftrag und für jede neue Anlageneinstellung ein Muster erstellt und geprüft, um die Einstellgrößen der Leiterverarbeitungsvorrichtung oder Crimpvorrichtung iterativ zu verifizieren. Zusätzlich müssen zur Dokumentation des freigegebenen Prozesses teilweise auch diverse Schliffbilder und Rückstellmuster hergestellt und entsprechend verwahrt werden. Sinngemäß erfolgt eine Qualitätsbewertung zweier Komponenten die miteinander verpresst werden mit gleichen Qualitätsbewertungsschritten.

Als weiteren Ansatz zur Bewertung der Qualität einer Crimpverbindung wird in der laufenden Produktion zumeist die Crimpkraftkurve als Kriterium überwacht und dokumentiert. Die Crimpkraftüberwachung ist im System einer Crimpvorrichtung integriert und basiert auf der Überwachung einer Min-Max-Grenze oder der Überwachung der Abweichung von Ist-Kurvenverläufen sowie -teilflächen von festgelegten Referenzwerten.

Im Rahmen von gesteigerten Anforderungen wird eine erweiterte Überwachungsmöglichkeit und darauf aufbauend eine verbesserte Qualität von Crimpverbindungen gefordert.

### Darstellung der Erfindung

Es ist ein Ziel der Erfindung, ein Verfahren zur Bewertung und Steuerung der Qualität von Crimpverbindungen, bereitzustellen, welches ein gesteigertes Qualitätsniveau bei erweitertem Nachweis der Qualität gewährleistet.

Anspruch 1 stellt ein entsprechendes Verfahren bereit. Weitere bevorzugte Ausführungsformen sind in den abhängigen Ansprüchen sowie nachfolgend beschrieben.

Das Verfahren zur Bewertung und Steuerung der Qualität von Crimpverbindungen, insbesondere unter Verwendung von KI oder maschinellem Lernen, umfasst dabei ein Erfassen von Prozessdaten vor, während und/oder nach einer Durchführung eines Crimpvorgangs mittels eines oder mehrerer Sensoren, wobei mindestens ein Modell, insbesondere ein Modell zum maschinellen Lernen und/oder ein KI-Modell (KI = künstliche Intelligenz), bereitgestellt wird, welches eine Durchführung eines Crimpvorgangs abbildet, und wobei die Prozessdaten mit dem Modell kombiniert werden. Auf Grundlage der Kombination werden mindestens eine mechanische Eigenschaft und/oder eine Klassifikation der Crimpverbindung bestimmt.

Anhand des erfindungsgemäßen Verfahrens kann frühzeitig und mit hoher Sicherheit die Produktion von fehlerhaften Crimpverbindungen vermieden werden. Dabei wird der Aufwand zur Überwachung und zur Steuerung reduziert.

Das Verfahren kann zumindest teilweise als computerimplementiertes Verfahren ausgebildet sein.

Eine "Crimpverbindung" wird durch Verpressen einer Komponente an einer anderen Komponente bereitgestellt. Eine Crimpverbindung ist dabei nicht auf eine bestimmte Eigenschaft der zu verbindenden Komponenten beschränkt. Gemäß einer Ausführungsform kann eine der Komponenten oder können beide Komponenten elektrisch leitend sein. Es können jedoch auch elektrisch nicht oder gering leitende Komponenten miteinander verpresst werden, um eine Crimpverbindung auszubilden. Ferner können mittels einer Crimpverbindung kombinierte Komponenten, insbesondere Mehrfachleiter, wie beispielsweise 3-adrige Leiter, Flachleiter und/oder von aneinandergefügten Komponenten verbunden werden.

Zum Herstellen einer Crimpverbindung wird eine Crimpvorrichtung verwendet, die zum Verpressen einer Komponente an einer anderen Komponente geeignet ist. Gemäß einem Ausführungsbeispiel wird mittels einer Crimpvorrichtung ein Kontaktelement mit einem Leiter verbunden, wobei die nachfolgend beschriebene Crimpvorrichtung nicht hierauf beschränkt ist.

Es ist bevorzugt, dass die mechanische Eigenschaft der Crimpverbindung eine Crimpbreite, ein Verpressungsgrad und/oder eine Abzugskraft ist. Diese mechanischen Eigenschaften haben sich bei Versuchen jeweils als Indikator bewährt.

Eine Klassifikation der Crimpverbindung betrifft beispielsweise die Einteilung in Gut- oder Schlecht-Teil.

Die Klassifikation kann nicht nur ein Gut oder Schlechtteil beschreiben, sondern auch je Klasse fein kristallin ein eigenes Merkmal und mehrere Merkmale sein. Innerhalb der einzelnen Klassifikation wird das oder die speziellen Merkmale immer innerhalb eines Bildes, welches im aktuellen Fall in einem Set aus 3 Bilder besteht, zu sehen sein. Es kann das spezielle Merkmal oder die speziellen Merkmale in jedem Bild vorhanden sein, dies natürlich in unterschiedlicher Ausprägung und Größe. Beispielweise könnte eine abgebogene Litze nicht in jedem Bild zu erkennen sein, jedoch kann diese in einem weiteren Bild als kürzerer Teil erfasst werden.

Die Prozessdaten werden beispielsweise als Weg-Zeit-Diagramm, insbesondere als Crimpkraftkurve, und/oder als ein optisches Bild (oder mehrere optische Bilder) abgebildet sein. Die Ermittlung der Crimpkraftkurve kann über einen Drehwinkel der Exzenterpresse, den einem Crimpstempel der Crimpvorrichtung zurückgelegten Weg oder über eine Zeit erfolgen. Die derart ermittelte Ist-Crimpkraftkurve wird nachfolgend weiter ausgewertet.

Eine oder mehrere Crimpkraft-Kurven können gemäß einer Ausführungsform einem weiteren Modell, insbesondere einem weiteren Modell zum maschinellen Lernen und/oder KI-Modell, zu Grunde gelegt werden.

Zur Steuerung der Qualität kann es vorgesehen sein, einen Betriebsparameter einer Crimpvorrichtung zu ändern. Dies kann manuell durch den Bediener der Crimpvorrichtung oder mittels einer Steuereinrichtung oder ein Leitsystem erfolgen, die eine Information von einer KI-Auswertung erhält. Gemäß einem weiteren Aspekt kann ergänzend ein Betriebsparameter einer Leiterverarbeitungsvorrichtung geändert werden, welche als Leiterverarbeitungsvorrichtung zum Vorbereiten, insbesondere zum Abisolieren, eines Leiters eingesetzt wird.

Ferner kann vor Durchführung eines Crimpvorgangs eine optische Inspektion einer vorbereiteten Komponente, insbesondere eines abisolierten Leiters, durchgeführt werden. Ein solcher Leiter ist insbesondere ein elektrischer Leiter, der elektrisch leitende Litzen sowie einen Kabelmantel umfasst.

Hierbei kann die optische Inspektion mittels Maschinenlernens erfolgen. Insbesondere werden Bilder der vorbereiteten Komponente, insbesondere des abisolierten Leiters, erkannt und analysiert. Dabei können hochauflösende Kameras eingesetzt werden, um Inline-Bilder der Komponenten, insbesondere Leitungen, aufzunehmen. Diese Bilder können mithilfe eines Systems zum maschinellen Lernen analysiert werden, um mögliche Fehler oder Abweichungen zu erkennen. Das System zum maschinellen Lernen kann dabei trainiert werden. In diesem Zusammenhang können Leitungen in Echtzeit überwacht und eine Überwachung gewährleistet werden.

Die bei Leitungen oder in Kurven auftretenden Fehler können bewertet und kategorisiert werden. Beispielsweise betrifft eine Gruppe einen Fehler in einer Isolierung der Komponente, insbesondere des Leiters, und eine andere Gruppe eine abstehende Litze. Liegt dann dieser Fehler bei der Vercrimpung im Bereich der Bearbeitungsstelle, so wirkt sich der Fehler auch in der Darstellung der Kurve aus. Bspw. Isolation im Crimp erzeugt ein eigenes Kurvenbild, wobei eine abstehende Litze während der Verpressung auch auf den Crimp aufgelegt und mit verpresst werden kann, oder nach hinten verbogen in den Isolationscrimp verpresst wird. All diese Ausführungen ergeben unterschiedliche Werte in den Bildern oder der Kurven im Vergleich zu Gutteilen.

Es ist bevorzugt, dass zur Bewertung der vorbereiteten Komponente, insbesondere des abisolierten Leiters, mehrere Bilder der Komponente, insbesondere des Leiters, aus verschiedenen Positionen aufgenommen und diese Bilder analysiert werden. Die ermittelten Bilder können einem Modell zugrunde gelegt werden.

Das Modell kann dabei vorab kategorisierte Fehler, also Fehler, die einer bestimmten Gruppe zugeordnet wurden, trainieren, sodass im Betrieb ebenfalls eine bestimmte Zuordnung erfolgen kann. Wenn kombinierte Fehler auftreten, beispielsweise wenn eine Komponente, insbesondere ein Leiter, sowohl eine beschädigte Isolierung als auch eine abstehende Litze aufweist, kann eine Zuordnung in beide Kategorien erfolgen, jedoch mindestens in eine Kategorie.

Gemäß einem weiteren Aspekt der Erfindung wird ein System zur Bewertung und Steuerung der Qualität von Crimpverbindungen bereitgestellt. Das System umfasst eine Crimpvorrichtung zum Anbringen eines Kontaktelements an einer Komponente, insbesondere einem Leiter, und eine Überwachungseinheit zur Ermittlung von Prozessdaten während einer Durchführung eines Crimpvorgangs, wobei die Überwachungseinheit eingerichtet ist, die Prozessdaten mit zumindest einem Modell, insbesondere einem Modell zum maschinellen Lernen, zu kombinieren und auf Grundlage der Kombination mindestens eine mechanische Eigenschaft und/oder eine Klassifikation der Crimpverbindung zu bestimmen. Das System kann eingerichtet sein, einen oder mehrere der zuvor beschriebenen Verfahrensschritte, auch mit zusätzlichen bspw. historischen oder Nachverfolgungs-Daten, auszuführen.

Gemäß einem weiteren Ausführungsbeispiel kann das System zur Bewertung und Steuerung der Qualität von Crimpverbindungen mehrere Crimpvorrichtungen aufweisen, die mit der genannten Überwachungseinheit in Verbindung stehen.

Das System kann eingerichtet sein, ein Verfahren gemäß einem der zuvor genannten Aspekte auszuführen.

### Kurze Beschreibung der Zeichnung

Weitere Merkmale und Vorteile der Erfindung ergeben sich aus der nachfolgenden Beschreibung.

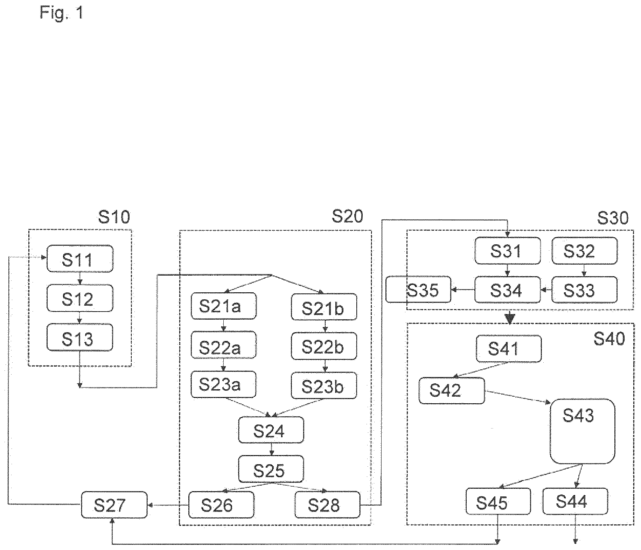

- Fig. 1: zeigt einen Verfahrensablauf gemäß einer bevorzugten Ausführungsform der Erfindung.

### Beschreibung von Ausführungsformen

Nachfolgend wird die Erfindung anhand eines Ausführungsbeispiels näher beschrieben. Obwohl die nachfolgende Erläuterung beispielhaft, und nicht einschränkend, zu verstehen ist, können Merkmale der nachfolgenden Beschreibung auch einzeln zur Spezifizierung der Erfindung herangezogen werden.

Anhand des beschriebenen Verfahrens wird ein Vorgehen erläutert, um die Qualität von Crimpverbindungen zu bewerten und zu steuern.

Eine Crimpvorrichtung wird zur Verbindung einer Komponente mit einer weiteren Komponente, insbesondere eines Kontaktelements mit einem Leiter, bevorzugt einem elektrischen Leiter, eingesetzt.

Anhand des nachfolgend beschriebenen Ausführungsbeispiels wird eine Verbindung eines Kontaktelements mit einem Leiter beschrieben, wobei gemäß einer Modifikation mit einer Crimpvorrichtung auch allgemein eine Verbindung einer Komponente mit einer weiteren Komponente hergestellt werden kann.

Gemäß dem Ausführungsbeispiel werden das Kontaktelement und ein Leiter durch plastische Verformung des Kontaktelements/ des Leiters kraftschlüssig miteinander verbunden. Zur Durchführung des Crimpvorgangs wird der abisolierte Leiter sowie ein Kontaktelement bereitgestellt und verarbeitet. Die Crimpvorrichtung umfasst eine Steuerung oder die Crimpvorrichtung ist mit einer solchen Steuerung in Verbindung.

Im Betrieb wird zur Herstellung einer Crimpverbindung zunächst eine Vorbereitung eines Leiters durchgeführt (S10). Hierzu wird ein Leiter in eine Abisoliervorrichtung einer Leiterverarbeitungsvorrichtung eingezogen (S11), abgelängt (S12) und abisoliert (S13). Ein Ablängen des Leiters kann auch zu einem späteren Zeitpunkt erfolgen. Nachfolgend erfolgt der Transport des derart vorbereiteten Leiters zu einer Crimpvorrichtung. Dabei kann der Transport manuell durch einen Bediener der Crimpvorrichtung oder mittels einer Fördereinrichtung erfolgen.

Vor Beginn des eigentlichen Crimpvorgangs kann nunmehr eine optische Inspektion durchgeführt werden (S20), im Zuge derer Bilddaten ausgewertet werden.

Zunächst wird der abisolierte Leiter manuell zugeführt (S21a), in die Crimpvorrichtung eingelegt (S22a) und zum Crimpstempel bewegt (S23a). Gemäß einer Modifikation können diese Schritte auch mittels einer Handhabungseinrichtung durchgeführt werden, indem der abisolierte Leiter mittels der Handhabungseinrichtung zugeführt (S21b), in die Crimpvorrichtung eingelegt (S22b) und zum Crimpstempel bewegt (S23b) wird.

Zur Bewertung des abisolierten Leiters werden hochauflösende Kameras eingesetzt, um ein oder mehrere Bilder des Leiters und/oder auch des Kontaktelements aus verschiedenen Positionen aufzunehmen (S24). Diese Bilder werden analysiert (S25), um mögliche Fehler oder Abweichungen zu identifizieren oder den abisolierten Leiter mit einer Soll-Verarbeitungsqualität abzugleichen. Das der Bewertung zu Grunde gelegte Modell oder die der Bewertung zu Grunde gelegten Modelle, insbesondere ein Modell zum maschinellen Lernen und/oder ein KI-Modell, wird/werden anhand der ermittelten Daten trainiert, um die Merkmale von Leitern oder Kontaktelementen zu identifizieren und die Qualität der Verbindungen im Prozess beurteilen zu können.

Um das Modell zu trainieren, werden die auftretenden Fehler kategorisiert. Beispielsweise betrifft eine Gruppe einen Fehler in einer Isolierung des Leiters und eine andere Gruppe eine abstehende Litze. Es können auch kombinierte Fehler auftreten, die auch aus mehreren Fehlern und neuen Fehlern bestehen können, die auch eine eigene Kategorie bilden können.

Um das Modell zu trainieren, werden die vorab kategorisierten Fehler, also Fehler, die einer bestimmten Gruppe zugeordnet wurden, eingelesen und ausgewertet. Im späteren Betrieb kann ebenfalls eine bestimmte Zuordnung von erfassten Fehlern erfolgen. Wenn kombinierte Fehler auftreten, beispielsweise wenn ein Leiter sowohl eine beschädigte Isolierung als auch eine abstehende Litze aufweist, erfolgt eine Zuordnung in beide Kategorien, jedoch mindestens in eine Kategorie.

Dadurch wird es ermöglicht, Leiter und/oder Kontaktelemente in Echtzeit zu überwachen und eine Überwachung dieser Komponenten zu gewährleisten. Es wird insbesondere sichergestellt, dass alle Leiter und/oder Kontaktelemente den Qualitätsstandards entsprechen und die nachfolgende Produktion entsprechend effizient und fehlerfrei durchgeführt werden kann.

Wird ein Leiter und/oder ein Kontaktelement als fehlerhaft bewertet (S26), erfolgt eine entsprechende Klassifikation und eine Entsorgung des fehlerhaften Leiters und/oder des fehlerhaften Kontaktelements (S27). Die Art und Ausprägung des Fehlers kann in das Modell integriert werden, um dieses weiterzuentwickeln.

Andernfalls wird der Leiter und ggf. das Kontaktelement als gut bewertet (S28) und für die weitere Verarbeitung freigegeben. Auch an dieser Stelle können Kennwerte in das Modell integriert werden, um dieses weiterzuentwickeln.

Im Rahmen des Verfahrens wird in einem nächsten Schritt der Crimpvorgang durchgeführt (S30). Hierzu wird der als gut bewertete Leiter (Schritt S28) zunächst zugeführt (S31), während mittels der Crimpvorrichtung ein Kontaktelement zugefördert oder ein Kontaktelementband eingezogen (S32) und ein Kontaktelement abgetrennt wird (S33). Ferner erfolgt mittels der Crimpvorrichtung ein Vercrimpen des Kontaktelements am Leiter (S34) sowie ein Abtransport des erstellten Produkts (S35).

Der Crimpvorgang wird während dessen Durchführung überwacht (S40). Die Überwachung kann mittels einer Überwachungseinheit erfolgen, die zur Ermittlung des Crimpkraftverlaufs an der Crimpvorrichtung vorgesehen ist.

Während des Fertigungsvorgangs wird während jedes Crimpvorgangs eine Sensorik, umfassend einen oder mehrere Sensoren, aktiviert (S41) und eine Crimpkraftkurve ermittelt (S42), wobei eine Ermittlung der Crimpkraftkurve über einen Drehwinkel der Exzenterpresse, den einem Crimpstempel der Crimpvorrichtung zurückgelegten Weg oder einer Zeit erfolgt. Die derart ermittelte Ist-Crimpkraftkurve wird nachfolgend mittels eines KI-Systems oder Systems zum maschinellen Lernen weiter ausgewertet (S43). Alternativ oder zusätzlich zur Crimpkraftkurve können von einer Kamera vor und während des Crimpvorgangs Bilder des Produkts aufgenommen und entsprechend weiterverarbeitet werden.

Somit werden mindestens eine mechanische Eigenschaft oder eine Klassifikation der Crimpverbindung oder eine Produktions- oder Prozesskenngröße oder statistische Daten bestimmt.

Das System zum maschinellen Lernen erkennt durch die Anomaliedetektion auch unbekannte Fehler bei der optischen sowie der Kurvenauswertung und lässt durch ein Mapping der Bildauswertung und/oder der Crimpkraftkurve auf Anlagenzustände vorausschauendes Eingreifen zu. Ferner enthält das System zum maschinellen Lernen eine Nachverfolgungs-Datenbank, um im Fall einer neuen Anomalie eine entsprechende Dokumentation vorzunehmen, sodass bei einem Rückruf eine möglichst genaue Einschränkung der betroffenen Bauteile anhand der Bilder und/oder der Kurvencharakteristiken möglich ist. Ergänzend zu den Daten werden die im System zum maschinellen Lernen generierten Analyseergebnisse hinterlegt, um langfristig die Qualität des Systems zu steigern und die von vom System getroffenen Entscheidungen zu dokumentieren.

Auf Grundlage dieser Auswertung wird das derart gefertigte Produkt als gut (S44) oder als Ausschuss (S45) bewertet. Wird ein Produkt als Ausschuss bewertet (S45), wird neben der Anomaliedetektion eine Klassifikation wiederkehrender Fehler und Zustände erfasst und in das System zum maschinellen Lernen integriert. Durch die Prozessüberwachung kann somit die Fertigungsqualität bereits beim ersten Produkt bewertet werden. Das Fertigen von Mustern kann demnach entfallen.

Zur Steuerung der Qualität der zu fertigenden Crimpverbindungen wird bei Bedarf ein Betriebsparameter einer Crimpvorrichtung geändert, wenn die bestimmte mechanische Eigenschaft der Crimpverbindung einen bestimmten Wert erreicht. Das Ändern eines Betriebsparameters kann dabei manuell durch einen Bediener oder durch eine Steuereinrichtung oder ein Leitsystem der Crimpvorrichtung erfolgen.

## Patentansprüche

1. Verfahren zur Bewertung und Steuerung der Qualität von Crimpverbindungen,
wobei Prozessdaten vor, während und/oder nach einer Durchführung eines Crimpvorgangs mittels eines oder mehrerer Sensoren erfasst werden (S41, S42),
und mindestens ein Modell, insbesondere ein KI-Modell, bereitgestellt wird (S43), welches eine Durchführung eines Crimpvorgangs abbildet,
wobei die Prozessdaten mit dem mindestens einen Modell kombiniert werden,
wobei auf Grundlage der Kombination mindestens eine mechanische Eigenschaft und/oder eine Klassifikation der Crimpverbindung bestimmt wird (S44, S45).

2. Verfahren gemäß Anspruch 1, wobei die mechanische Eigenschaft der Crimpverbindung eine Crimpbreite, ein Verpressungsgrad und/oder eine Abzugskraft ist.

3. Verfahren gemäß einem der vorangegangenen Ansprüche, wobei die Prozessdaten eine Crimpkraft-Kurve und/oder ein optisches Bild umfassen.

4. Verfahren gemäß Anspruch 3, wobei eine oder mehrere Crimpkraft-Kurven einem weiteren Modell zu Grunde gelegt werden.

5. Verfahren gemäß einem der vorangegangenen Ansprüche, wobei zur Steuerung der Qualität von Crimpverbindungen ein Betriebsparameter einer Crimpvorrichtung geändert wird, wenn die bestimmte mechanische Eigenschaft der Crimpverbindung einen bestimmten Wert erreicht.

6. Verfahren gemäß Anspruch 5, wobei ein Ändern eines Betriebsparameters manuell durch einen Bediener oder durch eine Steuereinrichtung oder ein Leitsystem erfolgt.

7. Verfahren gemäß einem der vorangegangenen Ansprüche, wobei vor oder nach Durchführung eines Crimpvorgangs eine optische Inspektion einer vorbereiteten Komponente, insbesondere eines abisolierten Leiters, durchgeführt wird.

8. Verfahren gemäß Anspruch 7, wobei zur Bewertung der vorbereiteten Komponente, insbesondere des abisolierten Leiters, ein oder mehrere Bilder der Komponente, insbesondere des Leiters, aus verschiedenen Positionen aufgenommen (S24) und diese Bilder analysiert werden (S25) .

9. Verfahren gemäß Anspruch 8, wobei die ermittelten Bilder einem Modell oder eine Klassifikation zugrunde gelegt werden.

10. System zur Bewertung und Steuerung der Qualität von Crimpverbindungen, umfassend:
eine Crimpvorrichtung zum Anbringen eines Kontaktelements an einer Komponente, insbesondere einem Leiter,
eine Überwachungseinheit zur Ermittlung von Prozessdaten vor, während und/oder nach einer Durchführung eines Crimpvorgangs, wobei die Überwachungseinheit eingerichtet ist, die Prozessdaten mit zumindest einem Modell, insbesondere zumindest einem KI-Modell, zu kombinieren und auf Grundlage der Kombination mindestens eine mechanische Eigenschaft und/oder eine Klassifikation der Crimpverbindung zu bestimmen (S44, S45) .

11. System gemäß Anspruch 10, wobei eine Steuereinrichtung der Crimpvorrichtung eingerichtet ist, zur Steuerung der Qualität von Crimpverbindungen einen Betriebsparameter einer Crimpvorrichtung zu ändern.

12. System gemäß Anspruch 10 oder 11, wobei das System ferner eine Einrichtung für eine optische Inspektion einer vorbereiteten Komponente, insbesondere eines abisolierten Leiters, aufweist.

13. System gemäß einem der Ansprüche 10-12, das System mehrere Crimpvorrichtungen umfasst, die mit der Überwachungseinheit in Verbindung stehen.
